# EUROPEAN PATENT APPLICATION

(11) **EP 2 919 532 A1**
(43) Date of publication of application: **16.09.2015**
(21) Application number: 14159875.5
(22) Date of filing: 14.03.2014
(51) Int. Cl.: H04W 52/02, H04W 84/04

(54) **Method for determining, among a set of nodes covering an area , a subset of nodes that are not in an energy saving mode**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Khanfouci, Mourad, 35708 Rennes Cedex 7 (FR); Brunel, Loïc, 35708 Rennes Cedex 7 (FR)
(74) Representative: Maillet, Alain

(57) **Abstract**

The present invention concerns a method for determining, among a set of nodes covering an area of a wireless cellular telecommunication network, a subset of nodes that are not in an energy saving mode, the nodes of the subset of nodes covering the area of the set of nodes when some nodes are in an energy saving mode. The method:
- determines links between neighbour nodes of the nodes of the set of nodes,
- determines, for each node a metric value, the metric being the number of unprocessed nodes the node is linked to,
- adds the node which has the highest metric value in the subset of nodes,
- marks the nodes which are neighbour of the added node as processed,
- reiterates the steps of determining the metrics, adding the node in the subset of nodes and marking the nodes as far as all the nodes have been processed.

## Description

The present invention relates generally to a method and a device for determining, among a set of nodes of a wireless cellular telecommunication network covering an area, a subset of nodes that are not in an energy saving mode.

Wireless cellular telecommunication networks are largely used today. Some base stations provide an access to such networks in small coverage areas. These base stations, named home base stations or pico base stations or femto base stations consume electric power and energy saving becomes an important topic.

For example, a subset of the home base stations may be kept active and other home base stations may be set to an energy saving mode, like a power off state while keeping the coverage area provided by the wireless cellular telecommunication network.

A transmission power optimization may also be performed in order to reduce the overall radiated power of the system and keep a quality of service for the mobile terminals served by the wireless cellular telecommunication network.

The present invention aims at efficiently calculating a minimum cardinality set of home base stations that compensate the coverage of other home base stations which are set in an energy saving mode.

This compensation set is constructed such that the performance of the active mobile terminals as well as idle mobile terminals in the coverage area is optimized.

To that end, the present invention concerns a method for determining, among a set of nodes of a wireless cellular telecommunication network covering an area, a subset of nodes that are not in an energy saving mode and the nodes not belonging to the subset of nodes being set in an energy saving mode, the nodes of the subset of nodes covering the area of the set of nodes when the nodes not belonging to the subset of nodes are in an energy saving mode, characterized in that the method comprises the steps of:
- determining links between neighbour nodes of the nodes of the set of nodes,
- determining for each node a metric value, the metric being the number of unprocessed nodes the node is linked to,
- adding the node which has the highest metric value in the subset of nodes,
- marking the nodes which are neighbour of the added node as processed,
- reiterating the steps of determining the metrics, of adding the node in the subset of nodes and of marking the nodes as far as all the nodes have been processed.

The present invention also concerns a device for determining, among a set of nodes of a wireless cellular telecommunication network covering an area, a subset of nodes that are not in an energy saving mode and the nodes not belonging to the subset of nodes being set in an energy saving mode, the nodes of the subset of nodes covering the area of the set of nodes when the nodes not belonging to the subset of nodes are in an energy saving mode, characterized in that the device comprises:
- means for determining links between neighbour nodes of the nodes of the set of nodes,
- means for determining, for each node a metric value, the metric being the number of unprocessed nodes the node is linked to,
- means for adding the node which has the highest metric value in the subset of nodes,
- means for marking the nodes which are neighbour of the added node as processed,
- means for reiterating the determining of the metrics, the adding of the node in the subset of nodes and the marking of the nodes as far as all the nodes have been processed.

Thus, the determined subset of nodes ensures the coverage for the mobile terminals in the coverage area of the set of nodes when nodes not in the subset of nodes are set in energy saving mode.

According to a particular feature, each node of the subset of nodes is neighbour of at least one node of the subset of nodes or each node of the subset of nodes not being a neighbour of the other nodes of the subset of nodes.

Thus, the determined subset of nodes is connected and the quality of service experienced by the active and/or idle mobile terminals may be further improved by using coordinated multipoint transmission techniques or inter cell interference coordination between the nodes of the subset of nodes.

According to a particular feature, the method is executed by a centralizing device and the links between neighbour nodes are links of a graph.

Thus, energy saving capabilities are improved since the subset of nodes is found using global coverage information of the coverage area of the set of nodes and the quality of service of the mobile terminals in the coverage area is maintained.

According to a particular feature, the method is executed by each node of the set of nodes device and the links between neighbour nodes are determined according to lists of neighbour nodes and lists of neighbour nodes of neighbour nodes.

Thus, the determination of the subset of nodes is made more flexible and efficient by additional signalling between the nodes of the set of nodes.

According to a particular feature, the subset of nodes is determined according to a metric value which is representative of the number of nodes that have not been processed, a node that has been processed is a node which is neighbour of a node of the subset of nodes.

Thus, the determined subset of nodes compensates the coverage of a maximum of neighbouring nodes that may be set into energy saving mode and the overall coverage of the set of nodes is maintained when the nodes not in the determined subset are set into energy saving.

According to a particular feature, each node of the subset of nodes is marked as processed.

Thus, the determined subset of nodes is not connected and so the coverage of the mobile terminals currently located in the area covered by the set of nodes is ensured with reduced signalling and the complexity of the determination of the subset of nodes is reduced.

According to a particular feature, the links are determined according to measurements reported by mobile terminals which are currently located in the area covered by the set of nodes and/or which were located in the area covered by the set of nodes and/or according to neighbour relation tables of the nodes of the set of nodes.

Thus, the coverage of the mobile terminals which are currently located in the area covered by the set of nodes is optimized when calculating the subset of nodes.

According to a particular feature, measurements are the Reference Signal Received Power and/or the Reference Signal Received Quality.

Thus, the quality of service experienced by the active mobile terminals that are currently located in the area covered by the set of nodes is optimized when calculating the subset of nodes.

According to a particular feature, the links are determined according to an extrapolated SINR value for each mobile terminal, the extrapolated SINR value being determined based on Reference Signal Received Power and/or the Reference Signal Received Quality and assumption that the node that may be a neighbour node is in an energy saving mode.

Thus, the quality of service of the mobile terminals in the coverage area of the set of nodes is improved as well as energy saving gain obtained from setting the nodes not in the subset of nodes in energy saving mode.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :
Fig. 1 represents coverage areas of nodes of a wireless cellular telecommunication network in which the present invention is implemented;
Fig. 2 is a diagram representing the architecture of a node in which the present invention is implemented;
Fig. 3 discloses an example of an algorithm executed by the node according to a first mode of realization of the present invention;
Fig. 4 represents an example of a graph constructed according to the present invention;
Fig. 5 discloses a first example of an algorithm executed by the node for determining a dominating subset according to the first mode of realization of the present invention;
Fig. 6 discloses a second example of an algorithm executed by the node for determining a dominating subset according to the first mode of realization of the present invention;
Fig. 7 discloses a first example of an algorithm executed by each node for determining a dominating subset according to a second mode of realization of the present invention;
Fig. 8 discloses a second example of an algorithm executed by each node for determining a dominating subset according to a second mode of realization of the present invention.

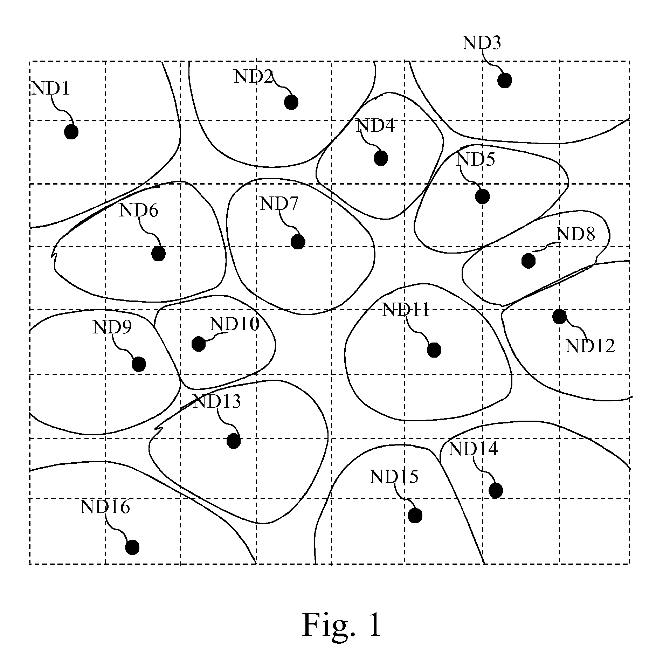

**Fig. 1** represents coverage areas nodes of a wireless cellular telecommunication network in which the present invention is implemented.

In the example of Fig. 1, a set of sixteen nodes noted ND1 to ND16 cover an area.

The nodes ND1 to ND16 are home base stations, pico base stations or femto base stations.

The nodes ND1 to ND16 radiate signals in a cell that can be received and processed by mobile terminals located in the area of the cells of the nodes ND1 to ND16. The nodes ND1 to ND16 receive and are able to process signals transferred by mobile terminals located in their respective cells.

The wireless cellular telecommunication network may comprise a centralizing device that is logically connected to the nodes ND1 to ND16 according to a first mode of realization. The centralizing device is not shown in Fig. 1 for a sake of clarity.

The centralizing device may be a dedicated device or may be comprised in a chosen home base station from the wireless cellular telecommunication network.

According to the first mode of realization of the present invention, the centralizing device or according to the second mode of realization of the present invention, each node:
- determines links between neighbour nodes of the nodes of the set of nodes,
- determines for each node a metric value, the metric being the number of unprocessed nodes the node is linked to,
- adds the node which has the highest metric value in the subset of nodes,
- marks the nodes which are neighbour of the added node as processed,
- reiterates the determining of the metrics, the adding of the node in the subset of nodes and the marking of the nodes as far as all the nodes have been processed.

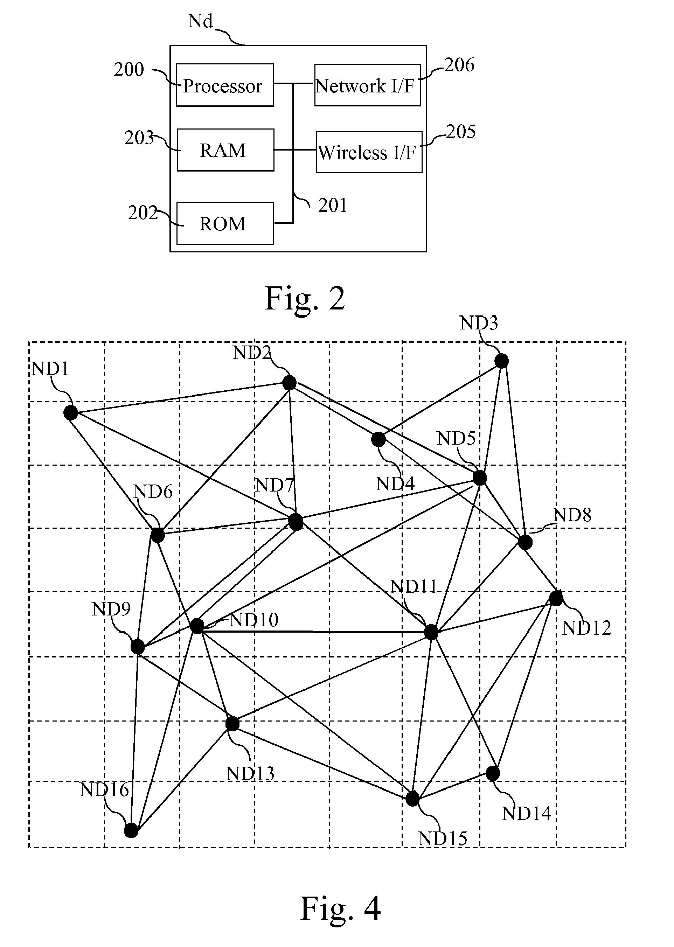

**Fig. 2** is a diagram representing the architecture of a node in which the present invention is implemented.

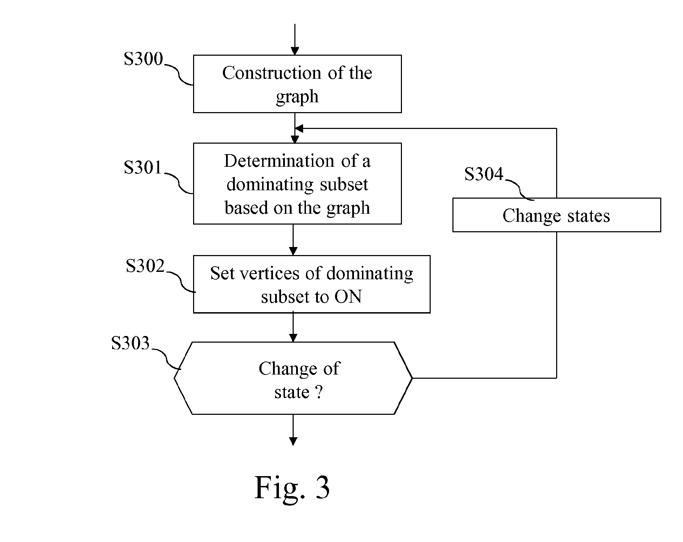

The node ND has, for example, an architecture based on components connected together by a bus 201 and a processor 200 controlled by the programs as disclosed in Figs. 3 and 5 to 6 or 7 to 8.

It has to be noted here that the node ND may have an architecture based on dedicated integrated circuits.

The bus 201 links the processor 200 to a read only memory ROM 202, a random access memory RAM 203, a network interface 204 and a wireless interface 205.

The memory 203 contains registers intended to receive variables and the instructions of the programs related to the algorithms as disclosed in Figs. 3 and 5 to 6 or 7 to 8.

The processor 200 controls the operation of the wireless interface 205.

The read only memory 202 contains instructions of the programs related to the algorithms as disclosed in Figs. 3 and 5 to 6 or 7 to 8., which are transferred, when the Node ND is powered on, to the random access memory 203.

Any and all steps of the algorithms described hereafter with regard to Figs. 3 and 5 to 6 or 7 to 8. may be implemented in software by execution of a set of instructions or program by a programmable computing machine, such as a PC (*Personal Computer*)*,* a DSP (*Digital Signal Professor*) or a microcontroller; or else implemented in hardware by a machine or a dedicated component, such as an FPGA (*Field-Programmable Gate Array*) or an ASIC (*Application-Specific Integrated Circuit*)*.*

In other words, the node ND includes circuitry, or a device including circuitry, causing the node ND to perform the steps of the algorithms described hereafter with regard to Figs. 3 and 5 to 6 or 7 to 8.

Such a device including circuitry causing the node ND to perform the steps of the algorithms described hereafter with regard to Figs. 3 and 5 to 6 or 7 to 8 may be an external device connectable to the node ND.

**Fig. 3** discloses an example of an algorithm executed by the node according to a first mode of realization of the present invention.

The present algorithm will be disclosed in an example where it is executed by the processor 200 of the node ND1 which acts as a centralizing device.

At step S300, the processor 200 constructs a graph representing mobile terminal dependent neighbourhood relation in the set of nodes ND1 to ND16. In this graph, every node is represented by a vertex. Two vertices are connected if two nodes are neighbours, i.e, if one mobile terminal under the coverage of one node ND also receives strong interference from the other node ND. The construction of the graph of the set of nodes may be based on the measurements reported by the mobile terminals which are currently located in the area covered by the set of nodes and/or which were located in the area covered by the set of nodes. For example, measurements are the Reference Signal Received Power (RSRP) and/or the Reference Signal Received Quality (RSRQ).

The construction of the graph of the set of nodes may be based on a neighbour relation tables (NRT) stored in RAM memory 203 of each node ND1 to ND16 and transferred to the node ND 1 which executes the present algorithm.

The construction of the graph of set of nodes may be based on the measurements reported by the mobile terminals and on the neighbour relation tables.

The processor 200 creates an edge of the graph between two nodes if one node belongs to the neighbour relation table of the other node or if at least one mobile terminal served by one node measures the Reference Signal Received Power and/or the Reference Signal Received Quality for the other node at a value higher than a predetermined value, for example equal to minus 6 dB. The at least one mobile terminal may be the mobile terminal or terminals having the highest Reference Signal Received Power and/or the Reference Signal Received Quality or having the minimum Reference Signal Received Power and/or the Reference Signal Received Quality or all the mobile terminals in the area covered by the set of nodes.

The processor 200 creates an edge of the graph between two nodes by extrapolating a signal to interference and noise ratio (SINR) value for each mobile terminal and compares it with a predetermined value. The extrapolated SINR value may be based on the RSRP and RSRQ measurements and expresses the SINR obtained if one of the two nodes is in an energy saving mode at the other node. If the SINR is higher than a predetermined value, the processor 200 creates the edge between the two nodes. The extrapolated SINR value may be based on the RSRP and RSRQ measurements and assumption that one of the two nodes is powered on. If the SINR loss is lower than a predetermined value, the processor 200 creates the edge between the two nodes.

At next step S301, the processor 200 determines a dominating subset of nodes. The dominating subset of nodes is the set of nodes that will not be set in an energy saving mode. The nodes not belonging to the dominating subset of nodes are allowed to be set in an energy saving mode. The dominating subset may be calculated as the minimum dominating set based on the graph created at step S300.

For example, the dominating subset D for the graph G of vertices V is such that every vertex in V either belongs to *D* or is a neighbour of a vertex in D. In other word, the nodes in the dominating subset D are neighbours to all the vertices of the graph G.

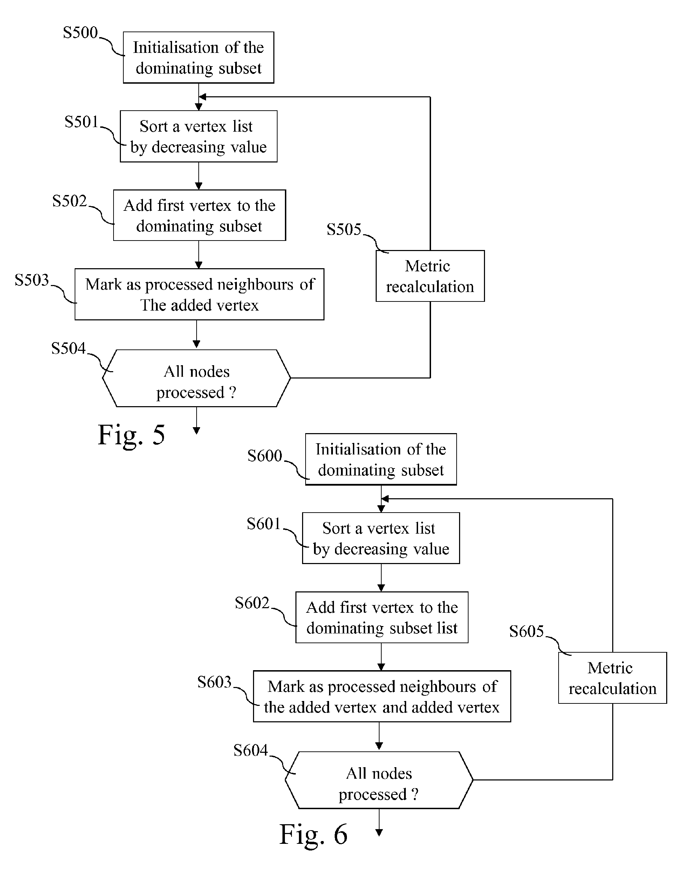

For example, the dominating subset D may be calculated as a minimum connected dominating subset based on the graph created at step S300. The minimum connected dominating set is a dominating subset of minimum size. The determination of the minimum connected dominating subset will be disclosed in more details in reference to Fig. 5.

The dominating subset of nodes may be calculated as a maximum independent set based on the graph created at step S300. Maximum independent set is a dominating subset where any two vertices are not adjacent, i.e. not connected. The determination of the maximum independent subset will be disclosed in more details in reference to Fig. 5.

At next step S302, the processor 200 sets all the nodes the vertices of which are in the dominating subset to active mode and the other into the energy saving mode.

At next step S303, the processor 200 checks if a change of state is needed. For example, the centralizing device node is monitoring the traffic related to ongoing communications of the mobile terminals in the coverage area of the set of nodes ND1 to ND16. If the average traffic is above a given threshold, the centralizing device triggers a change of state.

If a change of state is detected , the processor 200 moves to step S304.

At step S304, the processor 200 sets ON a subset of nodes that was previously in energy saving mode, i.e. sets in non-energy saving mode a subset of nodes that was previously in energy saving mode or all the nodes that was previously in energy saving mode.

After that, the processor 200 returns to step S301.

**Fig. 4** represents an example of a graph constructed according to the present invention.

In Fig. 4, vertices of nodes ND1 to ND16 and edges linking neighbouring nodes determined at step S300 are shown.

The node ND1 is linked to the nodes ND2, ND7 and ND6. The node ND2 is linked to the nodes ND1, ND4, ND5, ND6 and ND7. The node ND3 is linked to the nodes ND4, ND5 and ND8. The node ND4 is linked to the nodes ND2, ND3 and ND8. The node ND5 is linked to the nodes ND2, ND3, ND7, ND8, ND10 and ND11. The node ND6 is linked to the nodes ND1, ND2, ND7, ND9 and ND10. The node ND7 is linked to the nodes ND1, ND2, ND4, ND6, ND9, ND10 and ND 11. The node ND8 is linked to the nodes ND3, ND4, ND5, ND11 and ND12. The node ND9 is linked to the nodes ND6, ND7, ND10, ND13 and ND16. The node ND10 is linked to the nodes ND5, ND6, ND7, ND11, ND13, ND15 and ND16. The node ND11 is linked to the nodes ND4, ND7, ND8, ND10, ND12, ND13, ND14 and ND15. The node ND12 is linked to the nodes ND8, ND11, ND 14 and ND 15. The node ND 13 is linked to the nodes ND9, ND10, ND11, ND 15 and ND16. The node ND 14 is linked to the nodes ND11, ND12 and ND15. The node ND 15 is linked to the nodes ND10, ND11, ND12, ND13 and ND14. The node ND16 is linked to the nodes ND9, ND10 and ND13.

**Fig. 5** discloses a first example of an algorithm executed by the node for determining a dominating subset according to the first mode of realization of the present invention.

The present algorithm will be disclosed in an example where it is executed by the processor 200 of the node ND1 which acts as a centralizing device.

At step S500, the processor 200 initializes the dominating subset to an empty list.

At next step S501, the processor 200 sorts the list of vertices or nodes according to the value of a metric from the highest metric value to the lowest metric value.

The metric is set to an initial metric value and is for example the number of unprocessed nodes the node is linked to.

According to the example of Fig. 4, the node ND11 is linked to eight unprocessed nodes. The nodes ND7 and ND10 are linked to seven unprocessed nodes. The node ND5 is linked to six unprocessed nodes. The nodes ND2, ND6, ND8, ND9, ND13 and ND15 are linked to five unprocessed nodes. The node ND12 is linked to four unprocessed nodes. The nodes ND1, ND3, ND4, ND14 and ND16 are linked to three unprocessed nodes.

At next step S502, the processor 200 adds the first node or vertex of the list built at step S501 to the dominating subset. According to the example of Fig. 4, the vertex or node ND11 is added to the dominating subset.

At next step S503, the processor 200 marks as processed the vertices or nodes which are linked to the added node or vertex in the dominating subset. The nodes ND4, ND7, ND8, ND10, ND12, ND13, ND14 and ND15 are marked as processed.

At next step S504, the processor 200 checks if all nodes or vertices have been processed.

If all nodes or vertices have been processed, the processor 200 interrupts the present algorithm. Otherwise, the processor 200 moves to steps S505 and recalculates the metric.

According to the example of Fig. 4, the node ND7 is linked to five unprocessed nodes. The node ND10 is linked to four unprocessed nodes. The nodes ND2, ND5, ND6, ND8 and ND13 are linked to three unprocessed nodes. The nodes ND1, ND4, and ND19 are linked to two unprocessed nodes. The nodes ND3, ND12, ND14, ND15 and ND16 are linked to one unprocessed node. The node ND11 is no more linked to an unprocessed node.

The processor 200 adds the first node or vertex of the list built at step S505 to the dominating subset. According to the example of Fig. 4, the vertex or node ND7 is added to the dominating subset.

At next step S503, the processor 200 marks as processed the vertices or nodes which are linked to the added node or vertex in the dominating subset.

The nodes ND1, ND2, ND6, ND9 and ND11 are marked as processed.

At next step S504, the processor 200 checks if all nodes or vertices have been processed, moves to step S505 and recalculates the metric.

The nodes ND8 and ND10 are linked to two unprocessed nodes. The nodes ND2, ND3, ND4, ND5, ND9 and ND13 are linked to one unprocessed node. The nodes ND 1, ND6, ND7, ND11, ND12, ND 14, ND 15 and ND16 are no more linked to an unprocessed node.

The processor 200 adds the first node or vertex of the list built at step S505 to the dominating subset. According to the example of Fig. 4, the vertex or node ND8 is added to the dominating subset.

At next step S503, the processor 200 marks as processed the vertices or nodes which are linked to the added node or vertex in the dominating subset.

The nodes ND3 and ND5 are marked as processed.

At next step S504, the processor 200 checks if all nodes or vertices have been processed, moves to step S505 and recalculates the metric.

The nodes ND9, ND10 and ND13 are linked to one unprocessed node. The other nodes are no more linked to an unprocessed node.

The processor 200 adds the first node or vertex of the list built at step S505 to the dominating subset. According to the example of Fig. 4, the vertex or node ND9 is added to the dominating subset.

At next step S503, the processor 200 marks as processed the vertices or nodes which are linked to the added node or vertex in the dominating list.

The node ND16 is marked as processed.

As all the vertices or nodes are processed, the processor 200 interrupts the present algorithm.

The dominating subset comprises the nodes ND11, ND7, ND8 and ND9.

**Fig. 6** discloses a second example of an algorithm executed by the node for determining a dominating subset according to the first mode of realization of the present invention.

The present algorithm will be disclosed in an example where it is executed by the processor 200 of the node ND1 which acts as a centralizing device.

At step S600, the processor 200 initializes the dominating subset to an empty list.

At next step S601, the processor 200 sorts the list of vertices or nodes according to the value of a metric from the highest metric value to the lowest metric value.

The metric is set to an initial metric value and for example the number of unprocessed nodes the node is linked to.

According to the example of Fig. 4, the node ND11 is linked to eight unprocessed nodes. The nodes ND7 and ND10 are linked to seven unprocessed nodes. The node ND5 is linked to six unprocessed nodes. The nodes ND2, ND6, ND8, ND9, ND13 and ND15 are linked to five unprocessed nodes. The node ND12 is linked to four unprocessed nodes. The nodes ND1, ND3, ND4, ND14 and ND16 are linked to three unprocessed nodes.

At next step S602, the processor 200 adds the first node or vertex of the list built at step S501 to the dominating subset. According to the example of Fig. 4, the vertex or node ND11 is added to the dominating subset.

At next step S603, the processor 200 marks as processed the vertices or nodes which are linked to the added node or vertex in the dominating subset and marks as processed the added node or vertex in the dominating subset. The nodes ND4, ND7, ND8, ND10, ND11, ND12, ND 13, ND 14 and ND 15 are marked as processed.

At next step S604, the processor 200 checks if all nodes or vertices have been processed.

If all nodes or vertices have been processed, the processor 200 interrupts the present algorithm. Otherwise, the processor 200 moves to steps S605 and recalculates the metric over the unprocessed nodes.

According to the example of Fig. 4, the nodes ND2 and ND6 are linked to three unprocessed nodes. The nodes ND1, ND5, and ND9 are linked to two unprocessed nodes. The nodes and ND16 are linked to one unprocessed node.

At next step S602, the processor 200 adds the first node or vertex of the list build at step S601 to the dominating subset. According to the example of Fig. 4, the vertex or node ND6 is added to the dominating subset.

At next step S603, the processor 200 marks as processed the vertices or nodes which are linked to the added node or vertex in the dominating subset and marks as processed the added node or vertex in the dominating subset. The nodes ND1, ND2, ND9 and ND2 are marked as processed.

At next step S604, the processor 200 checks if all nodes or vertices have been processed.

If all nodes or vertices have been processed, the processor 200 interrupts the present algorithm. Otherwise, the processor 200 moves to steps S605 and recalculates the metric over the unprocessed nodes.

The nodes ND3 and ND5 are linked to one unprocessed node. The other nodes are no more linked to an unprocessed node.

At next step S602, the processor 200 adds the first node or vertex of the list built at step S501 to the dominating subset. The vertex or node ND3 is added to the dominating subset.

At next step S603, the processor 200 marks as processed the vertices or nodes which are linked to the added node or vertex in the dominating subset and marks as processed the added node or vertex in the dominating subset. The nodes ND3 and ND5 are marked as processed.

At next step S604, the processor 200 checks if all nodes or vertices have been processed.

If all nodes or vertices have been processed, the processor 200 interrupts the present algorithm. Otherwise, the processor 200 moves to steps S605 and recalculates the metric.

The nodes ND13 and ND9 are linked to one unprocessed node ND16. The other nodes are no more linked to an unprocessed node.

At next step S602, the processor 200 adds the first node or vertex of the list built at step S601 to the dominating subset. The vertex or node ND16 is added to dominating list.

At next step S603, the processor 200 marks as processed the vertices or nodes which are linked to the added node or vertex in the dominating subset and marks as processed the added node or vertex in the dominating subset. The node ND16 is marked as processed.

As all the vertices or nodes are processed, the processor 200 interrupts the present algorithm.

The dominating subset comprises the nodes ND11, ND6 and ND3 and ND16.

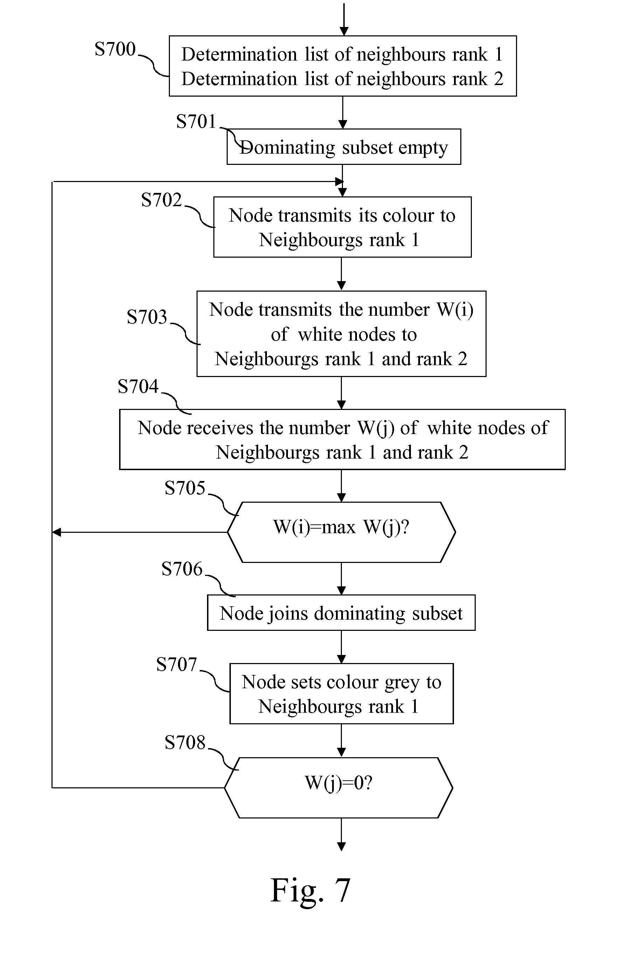

**Fig. 7** discloses a first example of an algorithm executed by each node for determining a dominating subset according to a second mode of realization of the present invention.

The present algorithm is more precisely executed by the processor 200 of each node.

At step S700, the processor 200 determines a list of neighbours of rank 1 and a list of neighbours of rank 2. The list of neighbours of rank 1 comprises the nodes identified on the measurements reported by the mobile terminals which are currently located in the area covered by the node and/or which were located in the area covered by the node. For example, measurements are the Reference Signal Received Power (RSRP) and/or the Reference Signal Received Quality (RSRQ).

For example, a node is in the list of neighbours of rank 1 if at least one mobile terminal served by the node measures the Reference Signal Received Power and/or the Reference Signal Received Quality for the other node at a value higher than a predetermined value, for example equal to minus 6 dB. The at least one mobile terminal may be the mobile terminal or terminals having the highest Reference Signal Received Power and/or the Reference Signal Received Quality or having the minimum Reference Signal Received Power and/or the Reference Signal Received Quality or all the mobile terminals in the area covered by the set of nodes.

For example, the processor 200 extrapolates an SINR value for each mobile terminal served by the node and compares it with a predetermined value. The extrapolated SINR value may be based on the RSRP and RSRQ measurements and assumption that the node that may included in the list of neighbours of rank 1 is in an energy saving mode. If the SINR is higher than a predetermined value, the processor 200 includes the node in the list of neighbours of rank 1. The extrapolated SINR value may be based on the RSRP and RSRQ measurements and assumption that the node that may included in the list of neighbours of rank 1 is powered on. If the SINR loss is lower than a predetermined value, the processor 200 includes the node in the list of neighbours of rank 1.

The list of neighbours of rank 2 comprises, for each node comprised in the list of neighbours of rank 1 of the node, the nodes which are comprised in their respective list of neighbours of rank 1.

At next step S701, the processor 200 sets a subset of dominating nodes to empty.

At next step S702, the processor commands the transfer to each node identified in the list of neighbours of rank 1 of the node, a message which indicates a color of the node. A black node is a node which is comprised in a dominating subset of nodes. A grey node is a node which is in the list of neighbours of rank 1 of a node of the dominating subset of nodes, i.e. a node which is marked as a processed node. A white node is a node which has not been processed by the present algorithm.

At next step S703, the processor 200 command the transfer to each node identified in the list of neighbours of rank 1 or in the list of neighbours of rank 2 of the node a message which indicates the number W(i) of white nodes which are identified in the list of neighbours of rank 1 of the node.

At next step S704, the processor 200 detects the reception, from each node identified in the list of neighbours of rank 1 or in the list of neighbours of rank 2 of the node, a message which indicates the number W(j) of white nodes which are identified in the list of neighbours of rank 1 of the node which sent the received message. In other words, W(j) is the number of unprocessed neighbour nodes.

At next step S705, the processor 200 checks if the number W(i) of white nodes in its list of neighbours of rank 1 is the maximum among the numbers W(j) received at step S704.

If the number W(i) of white nodes is the maximum among the numbers W(j) received at step S704, the processor 200 moves to step S706. Otherwise, the processor 200 returns to step S702.

At step S706, the processor 200 identifies the node as a node which belongs to the dominating subset of nodes. The node is then a black node.

At next step S707, the processor 200 sets each node identified in its list of neighbours of rank 1 as a grey node, i.e. as a processed node.

At next step S708, the processor 200 checks if each number W(j) of white nodes which are identified in the list of neighbours of rank 1 of the node which sent a message received at step S704 is equal to null value.

If each number W(j) is equal to null value, the processor 200 interrupts the present algorithm. Otherwise, the processor 200 returns to step S702.

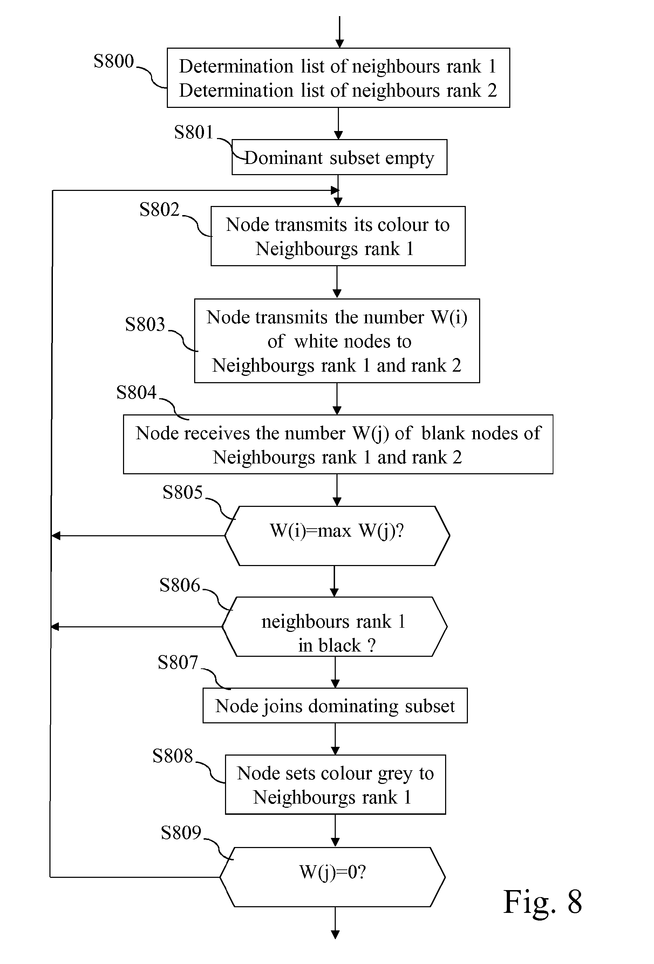

**Fig. 8** discloses a second example of an algorithm executed by each node for determining a dominating subset according to a second mode of realization of the present invention.

The present algorithm is more precisely executed by the processor 200 of each node.

At step S800, the processor 200 determines a list of neighbours of rank 1 and a list of neighbours of rank 2. The list of neighbours of rank 1 comprises the nodes identified on the measurements reported by the mobile terminals which are currently located in the area covered by the node and/or which were located in the area covered by the node. For example, measurements are the Reference Signal Received Power (RSRP) and/or the Reference Signal Received Quality (RSRQ).

For example, a node is in the list of neighbours of rank 1 if at least one mobile terminal served by the node measures the Reference Signal Received Power and/or the Reference Signal Received Quality for the other node at a value higher than a predetermined value, for example equal to minus 6 dB. The at least one mobile terminal may be the mobile terminal or terminals having the highest Reference Signal Received Power and/or the Reference Signal Received Quality or having the minimum Reference Signal Received Power and/or the Reference Signal Received Quality or all the mobile terminals in the area covered by the set of nodes.

For example, the processor 200 extrapolates an SINR value for each mobile terminal served by the node and compares it with a predetermined value. The extrapolated SINR value may be based on the RSRP and RSRQ measurements and assumption that the node that may included in the list of neighbours of rank 1 is in an energy saving mode. If the SINR is higher than a predetermined value, the processor 200 includes the node in the list of neighbours of rank 1. The extrapolated SINR value may be based on the RSRP and RSRQ measurements and assumption that the node that may included in the list of neighbours of rank 1 is powered on. If the SINR loss is lower than a predetermined value, the processor 200 includes the node in the list of neighbours of rank 1.

The list of neighbours of rank 2 comprises, for each node comprised in the list of neighbours of rank 1 of the node, the nodes which are comprised in their respective list of neighbours of rank 1.

At next step S801, the processor 200 sets a subset of dominating nodes to empty.

At next step S802, the processor commands the transfer to each node identified in the list of neighbours of rank 1 of the node, a message which indicates a color of the node. A black node is a node which is comprised in a dominating subset of nodes. A grey node is a node which is in the list of neighbours of rank 1 of a node of the dominating subset of nodes, i.e. a node which is marked as a processed node. A white node is a node which has not been processed by the present algorithm.

At next step S803, the processor 200 commands the transfer to each node identified in the list of neighbours of rank 1 or in the list of neighbours of rank 2 of the node, a message which indicates the number W(i) of white nodes which are identified in the list of neighbours of rank 1 of the node. In other words, W(j) is the number of unprocessed neighbour nodes.

At next step S804, the processor 200 detects the reception, from each node identified in the list of neighbours of rank 1 or in the list of neighbours of rank 2 of the node, a message which indicates the number W(j) of white nodes which are identified in the list of neighbours of rank 1 of the node which sent the received message.

At next step S805, the processor 200 checks if the number W(i) of white nodes in its list of neighbours of rank 1 is the maximum among the numbers W(j) received at step S704.

If the number W(i) of white nodes is the maximum among the numbers W(j) received at step S804, the processor 200 moves to step S806. Otherwise, the processor 200 returns to step S802.

At step S806, the processor 200 checks if at least one node identified in the list of neighbours of rank 1 of the node is a black node.

If at least one node identified in the list of neighbours of rank 1 of the node is a black node, the processor 200 returns to step S802. Otherwise, the processor 200 moves to step S807.

At step S807, the processor 200 identifies the node as a node which belongs to the dominating subset of nodes. The node is then a black node.

At next step S808, the processor 200 sets each node identified in its list of neighbours of rank 1 as a grey node, i.e. as a processed node.

At next step S808, the processor 200 checks if each number W(j) of white nodes which are identified in the list of neighbours of rank 1 of the node which sent a message received at step S804 is equal to null value.

If each number W(j) is equal to null value, the processor 200 interrupts the present algorithm. Otherwise, the processor 200 returns to step S802.

Naturally, many modifications can be made to the embodiments of the invention described above without departing from the scope of the present invention.

## Claims

1. Method for determining, among a set of nodes of a wireless cellular telecommunication network covering an area, a subset of nodes that are not in an energy saving mode and the nodes not belonging to the subset of nodes being set in an energy saving mode, the nodes of the subset of nodes covering the area of the set of nodes when the nodes not belonging to the subset of nodes are in an energy saving mode, **characterized in that** the method comprises the steps of:
- determining links between neighbour nodes of the nodes of the set of nodes,
- determining, for each node a metric value, the metric being the number of unprocessed nodes the node is linked to,
- adding the node which has the highest metric value in the subset of nodes,
- marking the nodes which are neighbour of the added node as processed,
- reiterating the steps of determining the metrics, of adding the node in the subset of nodes and of marking the nodes as far as all the nodes have been processed.

2. Method according to claim 1, **characterized in that** each node of the subset of nodes is neighbour of at least one node of the subset of nodes or each node of the subset of nodes not being a neighbour of the other nodes of the subset of nodes.

3. Method according to claim 1 or 2, **characterized in that** the method is executed by a centralizing device and **in that** the links between neighbour nodes are links of a graph.

4. Method according to claim 2, **characterized in that** each node of the subset of nodes is marked as processed.

5. Method according to claim 1, **characterized in that** the method is executed by each node of the set of nodes device and **in that** the links between neighbour nodes are determined according to lists of neighbour nodes and lists of neighbour nodes of neighbour nodes.

6. Method according to claim 5, **characterized in that** each node of the subset of nodes is marked as processed.

7. Method according to any of the claims 1 to 6, **characterized in that** the links are determined according to measurements reported by mobile terminals which are currently located in the area covered by the set of nodes and/or which were located in the area covered by the set of nodes and/or according to neighbour relation tables of the nodes of the set of nodes.

8. Method according to claim 7, **characterized in that** measurements are the Reference Signal Received Power and/or the Reference Signal Received Quality.

9. Method according to any of the claims 1 to 8, **characterized in that** the links are determined according to an extrapolated SINR value for each mobile terminal, the extrapolated SINR value being determined based on Reference Signal Received Power and/or the Reference Signal Received Quality and assumption that the node that may be a neighbour node is in an energy saving mode.

10. Device for determining, among a set of nodes of a wireless cellular telecommunication network covering an area, a subset of nodes that are not in an energy saving mode and the nodes not belonging to the subset of nodes being set in an energy saving mode, the nodes of the subset of nodes covering the area of the set of nodes when the nodes not belonging to the subset of nodes are in an energy saving mode, **characterized in that** the device comprises:
- means for determining links between neighbour nodes of the nodes of the set of nodes,
- means for determining, for each node a metric value, the metric being the number of unprocessed nodes the node is linked to,
- means for adding the node which has the highest metric value in the subset of nodes,
- means for marking the nodes which are neighbour of the added node as processed,
- means for reiterating the determining of the metrics, the adding of the node in the subset of nodes and the marking of the nodes as far as all the nodes have been processed.

11. Computer program which can be directly loadable into a programmable device, comprising instructions or portions of code for implementing the steps of the method according to claims 1 to 9, when said computer program is executed on a programmable device.
